# EUROPÄISCHE PATENTSCHRIFT

(11) **EP 2 389 706 B1**
(45) Veröffentlichungstag und Bekanntmachung des Hinweises auf die Patenterteilung: **13.08.2014**
(21) Anmeldenummer: 10700952.4
(22) Anmeldetag: 19.01.2010
(51) Int. Cl.: H01M 10/60, B60L 1/00, B60L 3/00, B60L 8/00, B60L 11/18

(54) **TEMPERIERTES BATTERIESYSTEM**
TEMPERATURE-CONTROLLED BATTERY SYSTEM
SYSTÈME DE BATTERIE À RÉGULATION THERMIQUE

(30) Priorität: 23.01.2009 DE 102009005852
(43) Veröffentlichungstag der Anmeldung: 30.11.2011
(73) Patentinhaber: Li-Tec Battery GmbH, 01917 Kamenz (DE)
(72) Erfinder: LACHENMEIER, Walter, 53757 Sankt Augustin (DE); SCHÄFER, Tim, 99768 Harztor (DE); GUTSCH, Andreas, 59348 Lüdinghausen (DE)
(74) Vertreter: Wallinger, Michael
(86) Internationale Anmeldenummer: PCT/EP2010/000286
(87) Internationale Veröffentlichungsnummer: WO 2010/083981

(56) Entgegenhaltungen:
- WO-A1-03/043841
- WO-A1-2006/134015
- DE-A1- 10 124 757
- US-A- 6 010 800
- US-A- 6 138 466
- US-A1- 2003 080 714
- US-A1- 2007 059 587
- US-A1- 2008 268 333

## Beschreibung

Die Erfindung betrifft ein Batteriesystem mit wenigstens einer Batterie, gemäß dem Oberbegriff des Anspruchs 1. Die Erfindung wird im Zusammenhang mit Lithium-Ionen-Batterien beschrieben. Es wird darauf hingewiesen, dass die Erfindung auch unabhängig von der Chemie der Batterie oder auch für wiederaufladbare Batterien Anwendung finden kann.

Batterien, insbesondere Lithium-Ionen-Batterien sind aus dem Stand der Technik als umweltfreundliche Energiespeicher mit besonders hoher Leistungsfähigkeit bekannt. Als sogenannte Großbatterien werden diese insbesondere in modernen Elektro- und Hybridfahrzeugen für die Energiespeicherung verwendet. Daneben sind auch stationäre Batteriesysteme bekannt, bspw. zur Notstromversorgung von Gebäuden.

Infolge von Lade- und Entladevorgängen kommt es in Batterien zu einer Wärmeentwicklung, wobei die umgesetzte Wärme abgeführt werden muss, um einen Wärmestau zu vermeiden und eine für die elektrische Effizienz der Batterie optimale Betriebstemperatur aufrecht zu erhalten. Andererseits kann es bei niedrigen Temperaturen förderlich sein, die Betriebstemperatur einer Batterie zu erhöhen, um die elektrische Effizienz zu verbessern. Die elektrische Effizienz kann z.B. anhand eines Wirkungsgrades, der elektrischen Kapazität oder einer momentanen Leistungsentfaltung (Leistungsabgabe) bemessen werden. Das Betreiben einer Batterie im Bereich ihrer optimalen Betriebstemperatur verlängert zudem deren Lebensdauer.

Die Aufgabe der Erfindung ist es, eine Möglichkeit zur Verlängerung der Lebensdauer von Batterien aufzuzeigen.

Diese Aufgabe wird gelöst durch ein Batteriesystem mit den Merkmalen des Anspruchs 1. Die Merkmale der abhängigen Ansprüche betreffen vorteilhafte und bevorzugte Weiterbildungen.

Erfindungsgemäß wird ein Batteriesystem vorgeschlagen, umfassend wenigstens eine Batterie, wobei ferner wenigstens eine Absorptionskältevorrichtung umfasst ist, die eine nutzbare Klimakälte zur Kühlung wenigstens einer Batterie bereitstellt. Das erfindungsgemäße Batteriesystem ist insbesondere, jedoch nicht ausschließlich, für ein Kraftfahrzeug vorgesehen.

Durch die Kühlung mittels der Absorptionskältevorrichtung kann die Lebensdauer einer Batterie, bzw. einer Vielzahl von Batterien, verlängert werden.

Eine Batterie kann aus einer einzelnen Zelle oder aus einer Vielzahl von bspw. gestapelten Zellen gebildet sein, wie dies aus dem Stand der Technik hinreichend bekannt ist. Ferner kann erfindungsgemäß auch eine Gruppe von Batterien vorgesehen sein. Die Batterie weist auch einen Elektrolyt auf. Dieser Elektrolyt kann Lithium-Ionen aufweisen.

Eine Absorptionskältevorrichtung ist eine Kältemaschine, deren Funktionsprinzip aus dem Stand der Technik hinreichend bekannt ist. In einem geschlossenen Kreislauf wird ein Kältemittel in einem Niederdruckbereich verdampft, wobei eine nutzbare Klimakälte erzeugt wird. Der entstehende Kältemitteldampf wird von einem Absorber (Absorptionsmittel) in der Regel unter Wärmeabgabe aufgenommen bzw. gelöst, was auch als Absorptionsvorgang bezeichnet wird. Der mit dem Kältemittel angereicherte Absorber wird anschließend in einen Hochdruckbereich gepumpt, wo unter Zuführung von Wärme, der so genannten Antriebswärme, eine Trennung von Kältemittel und Absorber erfolgt, was auch als Desorptionsvorgang bezeichnet wird. Anschließend erfolgt eine Kondensierung und Verflüssigung des Kältemittels durch Wärmeentzug und eine erneute Verdampfung. Die nutzbare Klimakälte kann durch Wärmetausch abgeführt werden.

Eine Absorptionskältevorrichtung zeichnet sich in vorteilhafter Weise durch einen geringen Energiebedarf und eine effektive Kältebereitstellung aus. Dadurch kann die elektrische Effizienz, wie insbesondere der Wirkungsgrad, eines Batteriesystems deutlich verbessert werden.

Gemäß einer bevorzugten Weiterbildung ist Wasser als Kältemittel für die Absorptionskältevorrichtung vorgesehen. Wasser stellt in vorteilhafter Weise ein äußerst umweltfreundliches Kältemittel dar.

Gemäß einer bevorzugten Weiterbildung ist ein ionisches Fluid als Absorber (bzw. Absorptionsmittel) für die Absorptionskältevorrichtung vorgesehen. Insofern könnte die Absorptionskältevorrichtung auch als "ionische Fluidkältemaschine" bezeichnet werden. Ionische Fluide bieten den Vorteil, dass diese nahezu beliebig in Wasser löslich sind, oder umgekehrt, und dass diese eine nur geringe korrosive Wirkung aufweisen. Ionische Fluide bieten ferner den Vorteil, dass diese im Prozess in der Regel vollständig regeneriert werden können. Ionische Fluide sind insbesondere flüssige Salze, die bevorzugt bereits bei Raumtemperatur nicht mehr fest sind. In vorteilhafter Weise verfügen diese flüssigen Salze über ein gutes Wärmespeichervermögen und sind in der Regel weder giftig noch umweltschädlich.

Von der Erfindung ist wenigstens ein Latentwärmespeicher als Wärmequelle umfasst, der eine Antriebswärme für die Absorptionskältevorrichtung bereit stellt. Ein Latentwärmespeicher ist eine Einrichtung, die thermische Energie verlustarm, mit vielen Wiederholzyklen und über lange Zeit zu speichern in der Lage ist. Latentwärmespeicher sind als verbaufertige Komponenten, insbesondere für den Kfz-Bereich, in verschiedenen Ausführungen am Markt erhältlich.

Eine Wärmequelle, welche eine Antriebswärme für die Absorptionskältevorrichtung bereitstellt, steht in thermischer Verbindung mit der Absorptionskältevorrichtung. Eine solche thermische Verbindung kann bspw. ein geschlossener Heizmittelkreislauf sein, der insbesondere ein Rohrleitungssystem umfasst.

Gemäß einer bevorzugten Weiterbildung ist wenigstens eine einer externen Energiequelle ausgesetzte Komponente als Wärmequelle umfasst, die eine Antriebswärme für die Absorptionskältevorrichtung bereitstellt. Bei dieser Komponente handelt es sich bevorzugt um eine Solaranlage. Mittels einer solchen Solaranlage kann bspw. die Energie eines durch Sonneneinstrahlung aufgeheizten Fahrzeugdaches als Antriebswärme für die Absorptionskältevorrichtung genutzt werden.

Gemäß einer bevorzugten Weiterbildung kann auch die Wärme wenigstens einer hoch dynamisch oder konstant betriebenen Batterie als Antriebswärme für die Absorptionskältevorrichtung genutzt werden, die in vorteilhafter Weise durch die abgegebene Wärme gleichfalls gekühlt wird. Bevorzugt wird diese Batterie nicht von der Absorptionskältevorrichtung gekühlt.

Gemäß einer bevorzugten Weiterbildung sind mehrere Wärmequellen umfasst, die jeweils eine Antriebswärme für die Absorptionskältevorrichtung bereitstellen oder bereit stellen können, wobei eine thermische Verbindung zwischen der Absorptionskältevorrichtung und wenigstens einer dieser Komponenten mittels wenigstens eines Ventils unterbrechbar, d.h. trennbar und wieder herstellbar, ist. Hierdurch kann bspw. situationsabhängig auf unterschiedliche Wärmequellen zugegriffen werden. Einzelne Wärmequellen können situationsabhängig zugeschaltet oder abgeschaltet werden, was mittels des Ventils erfolgt. Bevorzugt handelt es sich bei diesem Ventil um ein Wegeventil oder ein Regelventil.

Gemäß einer bevorzugten Weiterbildung ist vorgesehen, dass wenigstens ein Temperierkanal umfasst ist, in den die nutzbare Klimakälte der Absorptionskältevorrichtung als kühler Luftstrom einleitbar ist. Ein Temperierkanal kann bspw. auch durch ein Rohrleitungssystem gebildet sein, welches die Batterie umgibt. Alternativ können auch Wärmeleitbleche zur thermischen Verbindung der Batterie mit dem Temperierkanal vorgesehen sein. Der Temperierkanal weist wenigstens einen Einlass für den Luftstrom auf. Der Temperierkanal weist wenigstens einen Auslass auf, aus dem der Luftstrom wieder austreten kann.

Gemäß einer bevorzugten Weiterbildung ist wenigstens ein Wärmetauscher umfasst, der eine nutzbare Wärme zur Erwärmung der Batterie bereitstellt oder bereitstellen kann. Damit ist auch eine Erwärmung der Batterie möglich, wodurch die elektrische Effizienz des erfindungsgemäßen Batteriesystems weiterhin verbessert werden kann. Insbesondere ist eine umfängliche Temperierung (Thermostatierung) der Batterie möglich.

Gemäß einer bevorzugten Weiterbildung ist vorgesehen, dass dieser Wärmetauscher mit wenigstens einer Wärmequelle thermisch verbunden ist bzw. in thermischer Verbindung steht, die eine Antriebswärme für die Absorptionskältevorrichtung bereitstellt. Damit kann die Wärme einer Wärmequelle sowohl zum Antrieb der Absorptionskältevorrichtung und damit zur Kühlung der Batterie, als auch zur Erwärmung der Batterie genutzt werden.

Hierzu steht die betreffende Wärmequelle sowohl mit der Absorptionskältevorrichtung, als auch mit dem betreffenden Wärmetauscher in thermischer Verbindung, bspw. mittels eines Rohrleitungssystems. Die jeweilige thermische Verbindung ist idealerweise durch wenigstens ein Ventil herstellbar und/oder trennbar.

Gemäß einer bevorzugten Weiterbildung ist vorgesehen, dass die nutzbare Wärme zur Erwärmung der Batterie als warmer Luftstrom in den Temperierkanal einleitbar ist. Hierzu wird auf die obigen Ausführungen zum Temperierkanal verwiesen.

Gemäß einer bevorzugten Weiterbildung ist vorgesehen, dass wenigstens ein Ventil umfasst ist, um wahlweise einen warmen Luftstrom oder einen kühlen Luftstrom in den Temperierkanal einzuleiten oder einleiten zu können. Bevorzugt ist eine situationsabhängige Umschaltung mittels dieses Ventils zwischen Erwärmung oder Kühlung der Batterie vorgesehen.

Gemäß einer bevorzugten Weiterbildung ist vorgesehen, dass wenigstens eine Gebläseeinrichtung umfasst ist, um einen warmen oder kühlen Luftstrom durch den Temperierkanal anzutreiben. Bevorzugt ist diese Gebläseeinrichtung im Bereich des Einlasses des Temperierkanals angeordnet.

Gemäß einer bevorzugten Weiterbildung ist wenigstens eine Steuereinheit umfasst, welche eine prädiktive Steuerung und/oder Regelung der Temperatur der Batterie ermöglicht. Die prädiktive Regelung basiert auf einer Vorhersage des künftigen Systemverhaltens. Idealerweise erfolgt die Regelung mittels überschreibbarer Handlungsanweisungen, welche die Konditionierung des Batteriesystems entsprechend der Betriebsweisen und/oder der Alterung bedarfsgerecht einregeln. Die Regelung erfolgt bevorzugt softwarebasiert. Bevorzugt ist die Steuereinheit mit mindestens einer relevanten Komponente und besonders bevorzugt mit einer Vielzahl von relevanten Komponenten verbunden, über die Einfluss auf die Temperatur der Batterie genommen werden kann. Dies kann bspw. die Steuerung und/oder Regelung der oben genannten Ventile oder Gebläseeinrichtung umfassen. Bevorzugt kann diese Steuereinheit auch den Ladezustand der Batterie steuern und/oder regeln.

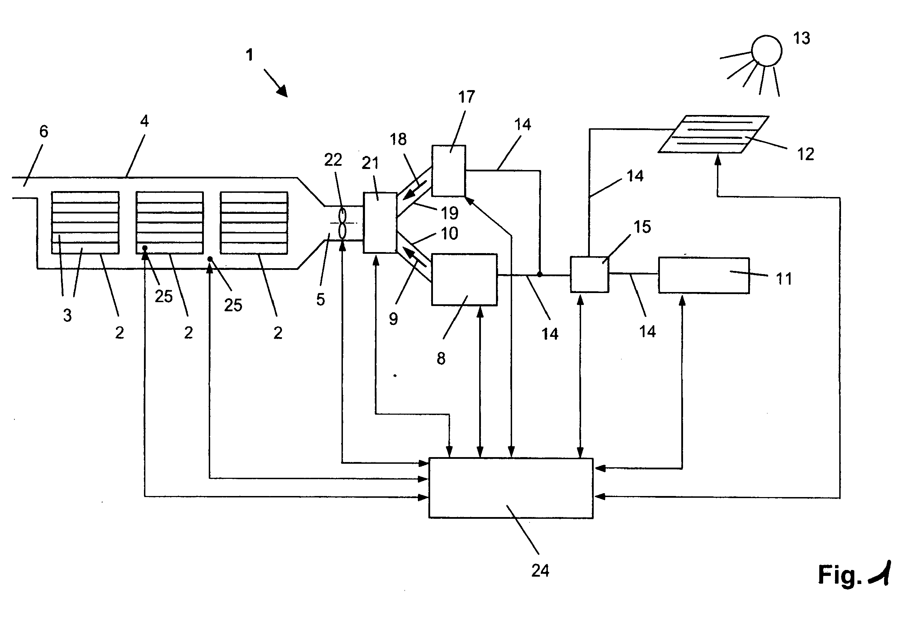

Die Erfindung wird nachfolgend anhand der einzigen Figur näher erläutert. Die Figur zeigt ein Ausführungsbeispiel des erfindungsgemäßen Lithium-lonen-Batteriesystems in einer schematischen Ansicht.

Das Lithium-Ionen-Batteriesystem ist mit 1 bezeichnet. Dieses umfasst mehrere Lithium-Ionen-Batterien 2, die jeweils aus einzelnen Zellen 3 gebildet sind. Die Lithium-Ionen-Batterien 2 sind in einem Temperierkanal 4 angeordnet, der hier lediglich beispielhaft die Lithium-Ionen-Batterien 2 vollständig umschließt. Der Temperierkanal verfügt über einen Einlass 5 und einen Auslass 6.

Das Lithium-Ionen-Batteriesystem 1 umfasst ferner eine Absorptionskältevorrichtung 8, welche eine nutzbare Klimakälte bereitstellt. Das Funktionsprinzip einer Absorptionskältevorrichtung wurde oben bereits erläutert. Die wesentlichen Vorteile einer Absorptionskältevorrichtung liegen in einem geringen Energiebedarf und einer effektiven Kältebereitstellung. Die Kälteübertragung erfolgt mittels eines kühlen Luftstroms 9, der durch einen Stutzen 10 und den Einlass 5 in den Temperierkanal 4 geleitet wird und dort zur Kühlung der Lithium-Ionen-Batterien 2 dient.

Die Antriebswärme für die Absorptionskältevorrichtung 8 wird in dem gezeigten Ausführungsbeispiel von zwei Wärmequellen bereitgestellt. Die erste Wärmequelle ist ein Latentwärmespeicher 11 und die zweite Wärmequelle ist eine Solaranlage 12, die einer externen Energiequelle, nämlich der Sonneneinstrahlung 13, ausgesetzt ist. Diese Solaranlage kann bspw. im Dach eines Kraftfahrzeugs angeordnet sein. Alternativ kann auch nur eine oder mehr als zwei Wärmequellen umfasst sein. Die Wärmequellen 11 und 12 stehen über einen geschlossenen Heizmittelkreislauf in thermischer Verbindung mit der Absorptionskältevorrichtung 8. Der Heizmittelkreislauf umfasst ein Rohrleitungssystem 14 mit Zu- und Rücklaufleitungen.

Die thermische Verbindung zwischen den Wärmequellen 11 und 12 und der Absorptionskältevorrichtung 8 kann mittels eines Ventils 15 situationsabhängig gesteuert, d.h. hergestellt und/oder getrennt werden. Bei dem Ventil 15 handelt es sich bevorzugt um ein Wegeventil oder ein Regelventil. Anstelle eines Ventils können auch mehrere Ventile vorgesehen sein, die bspw. den Zulauf und/oder den Rücklauf zu einer jeweiligen Wärmequelle herstellen und/oder trennen.

Das Lithium-Ionen-Batteriesystem 1 umfasst ferner einen Wärmetauscher 17 welcher eine nutzbare Wärme zur Erwärmung der Lithium-Ionen-Batterien 2 bereitstellen kann. Hierzu ist dieser Wärmetauscher 17 mit dem Heizmittelkreislauf bzw. dessen Rohrleitungssystem 14 thermisch verbunden. Die Wärme der Wärmequellen 11 und 12 kann somit auch zur Bereitstellung eines warmen Luftstroms 18 genutzt werden. Der warme Luftstrom 18 wird durch einen Stutzen 19 und den Einlass 5 in den Temperierkanal 4 geleitet und dient dort zur Erwärmung der Lithium-Ionen-Batterien 2.

Ein Ventil 21 dient der wahlweisen Einleitung eines kühlen Luftstroms 9 oder eines warmen Luftstroms 18 in den Temperierkanal 4. Das Ventil 21 kann auch als Klappe oder dergleichen ausgeführt sein. Dies ermöglicht ein situationsabhängiges Umschalten zwischen Erwärmung oder Kühlung der Lithium-Ionen-Batterien 2, wodurch zu jedem Zeitpunkt und bei unterschiedlichen Umgebungsbedingungen ein Betreiben der Lithium-lonen-Batterien 2 im Bereich ihrer optimalen Betriebstemperatur möglich ist, was die elektrische Effizienz verbessert und die Lebensdauer der Lithium-lonen-Batterien 2 erhöht.

Um das wahlweise Einleiten eines kühlen Luftstroms 9 oder eines warmen Luftstroms 18 in den Temperierkanal 4 zu ermöglichen, kann alternativ und/oder ergänzend zu dem Ventil 21 auch die thermische Verbindung zum Wärmetauscher 17 unterbrochen werden, wozu im Heizmittelkreislauf bzw. dessen Rohrleitungssystem 14 ein entsprechendes Ventil anzuordnen ist.

Im Einlass 5 zum Temperierkanal 4 ist eine Gebläseeinrichtung 22, wie insbesondere ein Lüfterrad, angeordnet, welche bzw. welches den kühlen Luftstrom 9 oder den warmen Luftstrom 18 im Temperierkanal 4 antreibt. Alternativ und/oder ergänzend können Gebläseeinrichtungen auch in den Stutzen 10 oder 19 angeordnet sein, oder in der Absorptionskältevorrichtung 8 und dem Wärmetauscher 17.

Das Lithium-Ionen-Batteriesystem 1 umfasst ferner eine Steuereinheit 24, welche eine prädiktive Regelung der Temperatur der Lithium-Ionen-Batterien 2 ermöglicht. Hierzu ist die Steuereinheit 24 mit allen für die Regelung der Temperatur relevanten Komponenten verbunden, wie insbesondere mit der Absorptionskältevorrichtung 8, mit dem Ventil 15, mit dem Ventil 21 und der Gebläseeinrichtung 22. Ferner ist die Steuereinheit 24 mit den Wärmequellen 11 und 12 verbunden, bspw. um deren momentanen Zustand zu erfassen und/oder um deren Wärmeaufnahme bzw. Wärmeabgabe regeln und/oder steuern zu können. In dem gezeigten Ausführungsbeispiel ist die Steuereinheit 24 auch mit dem Wärmetauscher 17 verbunden. Des weiteren ist die Steuereinheit 24 mit Temperaturfühlern 25 im Temperierkanal 4 und/oder an den Lithium-lonen-Batterien 2 verbunden.

Eine Simulation ergab, dass eine Wärmequelle mit 70 bis 80° C genutzt werden kann, um eine Klimakälte bzw. Kühltemperatur von 15° C für die Lithium-lonen-Batterien bereitstellen zu können. Eine Abwärme der Absorptionskältevorrichtung beträgt in diesem Fall ca. 40° C. Dies sind bevorzugte Werte für den Betrieb des erfindungsgemäßen Lithium-lonen-Batteriesystems.

## Patentansprüche

1. Batteriesystem (1), insbesondere für ein Kraftfahrzeug, mit wenigstens einer Batterie (2) und ferner wenigstens einer Absorptionskältevorrichtung (8), die eine nutzbare Klimakälte zur Kühlung wenigstens einer Batterie (2) bereitstellt, **dadurch gekennzeichnet, dass** das Batteriesystem (1) wenigstens einen Latentwärmespeicher (11) als Wärmequelle aufweist, der die Antriebswärme für die Absorptionskältevorrichtung (8) bereitstellt.

2. Batteriesystem (1) nach Anspruch 1, **dadurch gekennzeichnet, dass** Wasser als Kältemittel für die Absorptionskältevorrichtung (8) vorgesehen ist.

3. Batteriesystem (1) nach Anspruch 1 oder 2, **dadurch gekennzeichnet, dass** ein ionisches Fluid als Absorber für die Absorptionskältevorrichtung (8) vorgesehen ist.

4. Batteriesystem (1) nach einem der vorausgehenden Ansprüche, **dadurch gekennzeichnet, dass** das Batteriesystem (1) wenigstens eine einer externen Energiequelle ausgesetzte Komponente (12) als Wärmequelle aufweist, die eine Antriebswärme für die Absorptionskältevorrichtung (8) bereitstellt.

5. Batteriesystem (1) nach einem der vorausgehenden Ansprüche, **dadurch gekennzeichnet, dass** das Batteriesystem (1) mehrere Wärmequellen (11, 12) aufweist, die jeweils eine Antriebswärme für die Absorptionskältevorrichtung (8) bereitstellen, wobei eine thermische Verbindung zwischen der Absorptionskältevorrichtung (8) und wenigstens einer dieser Komponenten mittels wenigstens eines Ventils (15) unterbrechbar ist.

6. Batteriesystem (1) nach einem der vorausgehenden Ansprüche, **dadurch gekennzeichnet, dass** das Batteriesystem (1) wenigstens einen Temperierkanal (4) aufweist, in den die nutzbare Klimakälte der Absorptionskältevorrichtung (8) als kühler Luftstrom (9) einleitbar ist.

7. Batteriesystem (1) nach einem der vorausgehenden Ansprüche, **dadurch gekennzeichnet, dass** das Batteriesystem (1) wenigstens einen Wärmetauscher (17) aufweist, der eine nutzbare Wärme zur Erwärmung der Batterie (2) bereitstellt.

8. Batteriesystem (1) nach Anspruch 7, **dadurch gekennzeichnet, dass** dieser Wärmetauscher (17) mit wenigstens einer Wärmequelle (11, 12) thermisch verbunden ist, die eine Antriebswärme für die Absorptionskältevorrichtung (8) bereitstellt.

9. Batteriesystem (1) nach Anspruch 7 oder 8, **dadurch gekennzeichnet, dass** die nutzbare Wärme zur Erwärmung der Batterie (2) als warmer Luftstrom (18) in den Temperierkanal (4) einleitbar ist.

10. Batteriesystem (1) nach Anspruch 9, **dadurch gekennzeichnet, dass** das Batteriesystem (1) wenigstens ein Ventil (21) aufweist, um wahlweise einen warmen Luftstrom (18) oder einen kühlen Luftstrom (9) in den Temperierkanal (4) einzuleiten.

11. Batteriesystem (1) nach einem der Ansprüche 6 bis 10, **dadurch gekennzeichnet, dass** das Batteriesystem (1) wenigstens eine Gebläseeinrichtung (22) aufweist, um einen warmen (18) oder kühlen (9) Luftstrom durch den Temperierkanal (4) anzutreiben.

12. Batteriesystem (1) nach einem der vorausgehenden Ansprüche, **dadurch gekennzeichnet, dass** das Batteriesystem (1) eine Steuereinheit (24) aufweist, welche eine prädiktive Regelung der Temperatur der Batterie (2) ermöglicht.

## Claims

1. A battery system (1), particularly for a motor vehicle, having at least one battery (2) as well as at least one absorption refrigeration apparatus (8) providing usable ambient cooling for cooling at least one battery (2), **characterized in that** the battery system (1) comprises at least one latent heat accumulator (11) as a heat source providing the driving heat for the absorption refrigeration apparatus (8).

2. The battery system (1) according to claim 1, **characterized in that** water is provided as a refrigerant for the absorption refrigeration apparatus (8).

3. The battery system (1) according to claim 1 or 2, **characterized in that** an ionic fluid is provided as an absorber for the absorption refrigeration apparatus (8).

4. The battery system (1) according to any one of the preceding claims, **characterized in that** the battery system (1) comprises at least one external energy source component (12) as a heat source providing a driving heat for the absorption refrigeration apparatus (8).

5. The battery system (1) according to any one of the preceding claims, **characterized in that** the battery system (1) comprises a plurality of heat sources (11, 12) which each respectively provide a driving heat for the absorption refrigeration apparatus (8), wherein thermal coupling between the absorption refrigeration apparatus (8) and at least one of said components can be interrupted by means of at least one valve (15).

6. The battery system (1) according to any one of the preceding claims, **characterized in that** the battery system (1) comprises at least one temperature control channel (4) into which the usable ambient cooling of the absorption refrigeration apparatus (8) can be introduced as a cool airflow (9).

7. The battery system (1) according to any one of the preceding claims, **characterized in that** the battery system (1) comprises at least one heat exchanger (17) which provides usable heat for heating the battery (2).

8. The battery system (1) according to claim 7, **characterized in that** said heat exchanger (17) is thermally coupled to at least one heat source (11, 12) providing a driving heat for the absorption refrigeration apparatus (8).

9. The battery system (1) according to claim 7 or 8, **characterized in that** the usable heat for heating the battery (2) can be introduced into the temperature control channel (4) as a warm airflow (18).

10. The battery system (1) according to claim 9, **characterized in that** the battery system (1) comprises at least one valve (21) for selectively introducing a warm airflow (18) or a cool airflow (9) into the temperature control channel (4).

11. The battery system (1) according to any one of claims 6 to 10, **characterized in that** the battery system (1) comprises at least one blower device (22) for driving a warm (18) or cool (9) airflow through the temperature control channel (4).

12. The battery system (1) according to any one of the preceding claims, **characterized in that** the battery system (1) comprises a control unit (24) which enables predictive control of the temperature of the battery (2).

## Revendications

1. Système de batterie (1), en particulier pour un véhicule automobile, avec au moins une batterie (2) et, en outre, au moins un dispositif réfrigérateur à absorption (8), qui fournit une climatisation utile pour refroidir au moins une batterie (2), **caractérisé en ce que** le système de batterie (1) présente au moins un accumulateur de chaleur latente (11) comme source de chaleur, qui fournit la chaleur d'alimentation du dispositif réfrigérateur à absorption (8).

2. Système de batterie (1) selon la revendication 1, **caractérisé en ce que** de l'eau est prévue comme fluide frigorigène pour le dispositif réfrigérateur à absorption (8).

3. Système de batterie (1) selon la revendication 1 ou 2, **caractérisé en ce qu'**un fluide ionique est prévu comme absorbeur pour le dispositif réfrigérateur à absorption (8).

4. Système de batterie (1) selon l'une des revendications précédentes, **caractérisé en ce que** le système de batterie (1) présente au moins un composant (12) exposé à une source d'énergie externe comme source de chaleur, qui fournit une chaleur d'alimentation pour le dispositif réfrigérateur à absorption (8).

5. Système de batterie (1) selon l'une des revendications précédentes, **caractérisé en ce que** le système de batterie (1) présente plusieurs sources de chaleur (11, 12), qui fournissent chacune une chaleur d'alimentation pour le dispositif réfrigérateur à absorption (8), dans lequel une liaison thermique entre le dispositif réfrigérateur à absorption (8) et au moins un de ces composants peut être coupée à l'aide d'au moins une soupape (15).

6. Système de batterie (1) selon l'une des revendications précédentes, **caractérisé en ce que** le système de batterie (1) présente au moins un canal d'égalisation (4), dans lequel le froid utile de climatisation du dispositif réfrigérateur à absorption (8) peut être introduit comme courant d'air frais (9).

7. Système de batterie (1) selon l'une des revendications précédentes, **caractérisé en ce que** le système de batterie (1) présente au moins un échangeur de chaleur (17), qui fournit une chaleur utile pour réchauffer la batterie (2).

8. Système de batterie (1) selon la revendication 7, **caractérisé en ce que** cet échangeur de chaleur (17) est relié thermiquement à au moins une source de chaleur (11, 12), qui fournit une chaleur d'alimentation pour le dispositif réfrigérateur à absorption (8).

9. Système de batterie (1) selon la revendication 7 ou 8, **caractérisé en ce que** la chaleur utile pour réchauffer la batterie (2) peut être introduite comme courant d'air chaud (18) dans le canal d'égalisation (4).

10. Système de batterie (1) selon la revendication 9, **caractérisé en ce que** le système de batterie (1) présente au moins une soupape (21), afin d'introduire facultativement un courant d'air chaud (18) ou un courant d'air frais (9) dans le canal d'égalisation (4).

11. Système de batterie (1) selon l'une des revendications 6 à 10, **caractérisé en ce que** le système de batterie (1) présente au moins un dispositif de ventilation (22) pour impulser un courant d'air chaud (18) ou frais (9) à travers le canal d'égalisation (4).

12. Système de batterie (1) selon l'une des revendications précédentes, **caractérisé en ce que** le système de batterie (1) présente une unité de commande (24), laquelle permet un réglage prévisionnel de la température de la batterie (2).
